# EUROPÄISCHE PATENTSCHRIFT

(11) **EP 1 063 762 B1**
(45) Veröffentlichungstag und Bekanntmachung des Hinweises auf die Patenterteilung: **05.10.2005**
(21) Anmeldenummer: 00112281.1
(22) Anmeldetag: 08.06.2000
(51) Int. Cl.: H02P 8/32, H02P 8/12

(54) **Verfahren zum Positionieren eines Schrittmotors und elektrischer Antrieb**
Method for positioning a stepper motor and electric drive
Méthode de positionnement d'un moteur pas-à-pas et entraînement électrique

(30) Priorität: 21.06.1999 DE 19928356
(43) Veröffentlichungstag der Anmeldung: 27.12.2000
(73) Patentinhaber: Berger Lahr GmbH & Co. KG, 77933 Lahr (DE)
(72) Erfinder: Saumer, Markus, 77948 Friesenheim (DE)
(74) Vertreter: Patent- und Rechtsanwaltssozietät Maucher, Börjes & Kollegen

(56) Entgegenhaltungen:
- EP-A- 0 049 948
- EP-A- 0 569 191
- DE-A- 4 003 522
- PATENT ABSTRACTS OF JAPAN vol. 1999, no. 09, 30. Juli 1999 (1999-07-30) & JP 11 122990 A (CANON INC), 30. April 1999 (1999-04-30)
- PATENT ABSTRACTS OF JAPAN vol. 1999, no. 08, 30. Juni 1999 (1999-06-30) & JP 11 089290 A (CANON INC), 30. März 1999 (1999-03-30)

## Beschreibung

Die Erfindung betrifft ein Verfahren zum Positionieren eines Schrittmotors, wobei zum Erzeugen eines Statordrehfeldes ein den Strangstromverlauf in den Wicklungssträngen vorgebendes Stromsollsignal erzeugt wird, und wobei die Strangströme in einem Regelkreis bis zu einer vorgegebenen Aussteuerungsgrenze der Strangspannung entsprechend dem Stromsollsignal stromgeregelt und der Schrittmotor ab dieser Aussteuerungsgrenze spannungsgesteuert betrieben wird.

Ein solches Verfahren ist aus dem Dokument JP 11 122 990 bekannt.

Außerdem bezieht sich die Erfindung auf einen elektrischen Antrieb, mit einem Schrittmotor und mit einem Regelkreis zum Regeln der Strangströme in den Stator-Wicklungssträngen des Schrittmotors, wobei der Regelkreis einen Soll-Istwert-Vergleicher und einen Stromregler aufweist, dem eine Endstufe zum Ansteuern der Wicklungsstränge nachgeschaltet ist, und mit einem mit dem Sollwerteingang des Soll-Istwert-Vergleichers verbundenen, ein Ausgangssignal liefernden Signalgenerator.

Man kennt bereits einen elektrischen Antrieb der eingangs genannten Art, bei dem am Ausgang des Signalgenerators ein Sollstromsignal mit einer der Anzahl der Wicklungsstränge des Schrittmotors entsprechenden Anzahl etwa sinusförmiger Führungssignale anliegt. Der Ausgang des Signalgenerators ist mit dem Eingang eines Strom-Regelkreises verbunden, mit dem im stromgeregelten Betrieb des Schrittmotors die Strangströme der Wicklungsstränge so eingestellt werden, daß ihr Verlauf jeweils etwa dem dem betreffenden Wicklungsstrang zugeordneten Führungssignal entspricht. Zur Regelung eines Strangstromes werden Istwerte des Strangstromes gemessen und mittels des Soll-Istwert-Vergleichers mit dem dem Strangstrom zugeordneten Führungssignal verglichen. Bei einer Abweichung wird die Strangspannung des betreffenden Wicklungsstrangs durch entsprechendes Ansteuern des Endstufe so verändert, daß die Abweichung des Strangstroms von dem Führungssignal reduziert wird. Dabei ist der Spannungsbereich, innerhalb dem die Strangspannung einstellbar ist, durch eine durch die Betriebsspannung vorgegebene Aussteuerungsgrenze nach oben begrenzt. Beim Überschreiten der Aussteuerungsgrenze kann der Strangstrom nicht mehr weiter erhöht werden und der Wicklungsstrang wird dann spannungsgesteuert mit der maximal einstellbaren Strangspannung betrieben. Ein derartiger spannungsgesteuerter Betrieb des Schrittmotors tritt insbesondere bei hohen Drehzahlen auf, da die in den Wicklungssträngen induzierten elektrischen Spannungen mit zunehmender Rotordrehzahl ansteigen, so daß dann entsprechend hohe Strangspannungen an den Wicklungssträngen angelegt werden müssen, um die Strangströme noch regeln zu können. Mechanische Schwingungen des Rotors um die Rotorachse, die beispielsweise aufgrund einer Belastung der Rotorantriebswelle mit unterschiedlichen Drehmomenten auftreten können, bewirken eine Änderung der in den Wicklungssträngen induzierten Spannung. Dem spannungsgesteuerten Betrieb des Schrittmotors resultieren diese Spannungsänderungen in entsprechenden Veränderungen der Strangströme, wodurch sich Schwankungen im Antriebsmoment des Schrittmotors ergeben, welche die mechanischen Schwingungen des Rotors noch verstärken können. Der vorbekannte elektrische Antrieb weist deshalb besonders bei hohen Drehzahlen noch einen vergleichsweise unruhigen Motorlauf auf.

Es besteht deshalb die Aufgabe, einen elektrischen Antrieb und ein Verfahren der eingangs genannten Art zu schaffen, die insbesondere im Übergangsbereich zwischen stromgeregeltem und spannungsgesteuertem Betrieb des Schrittmotors einen vibrationsarmen Motorlauf ermöglichen.

Die Lösung dieser Aufgabe besteht bezüglich des Verfahrens darin, daß im Bereich der Aussteuerungsgrenze und/oder beim Überschreiten der Aussteuerungsgrenze des Regelkreises das Stromsollsignal des Regelkreises um einen vorgegebenen Offsetwert betragsmäßig erhöht und als Sollwertsignal dem Regelkreis zugeführt wird.

Der Erfindung liegt die Erkenntnis zugrunde, daß die aufgrund von mechanischen Rotorschwingungen im spannungsgesteuerten Betrieb des Schrittmotors auftretenden Schwankungen der Strangströme insbesondere im Bereich des Nulldurchgangs des Stromsollsignales die durch Vergleich des Stromsollsignales mit den Strangströmen gebildete Regelabweichung des Stromregelkreises beeinflussen kann. Dabei ist es sogar möglich, daß die Regelabweichung bis auf Null reduziert wird oder sogar ihr Vorzeichen umkehrt. Bei einer Vorzeichenumkehr der Regelabweichung ergibt sich dann eine Umkehr des Vorzeichens der an die Wicklungsstränge angelegten, treibenden Strangspannung, wodurch die mechanischen Rotorschwingungen noch verstärkt werden. Somit kann es zu einer gegenseitigen Verstärkung der mechanischen und der dadurch bewirkten elektrischen Schwingungen des Schrittmotors kommen.

Erfindungsgemäß wird einer derartigen, unerwünschten Veränderung der in dem Regelkreis gebildeten Regelabweichung dadurch entgegengewirkt, daß im spannungsgesteuerten Betrieb des Schrittmotors oder im Übergangsbereich zwischen stromgeregeltem und spannungsgesteuertem Betrieb des Schrittmotors der Betrag des Stromsollwerts des Regelkreises um einen vorgegebenen Offset erhöht wird. Der Einfluß des Istwertes der Strangströme auf die in dem Regelkreis gebildete Regelabweichung wird somit reduziert. Dadurch können beim Auftreten mechanischer Schwingungen durch diese Schwingungen bedingte Nullstellen und/oder Vorzeichenwechsel in der Regelabweichung vermieden werden. In vorteilhafter Weise wird dadurch einer gegenseitigen Verstärkung von mechanischen und elektrischen Schwingungen entgegengewirkt, wodurch sich im spannungsgesteuerten Betrieb und/oder im Übergang zum spannungsgesteuerten Betrieb ein vibrationsarmer Motorlauf ergibt. Durch das erfindungsgemäße Verfahren werden insbesondere bei hohen Drehzahlen mechanische Schwingungen und Vibrationen des Motors vermieden.

Besonders vorteilhaft ist, wenn der Offsetwert in Abhängigkeit von der die Rotordrehzahl des Schrittmotors bestimmenden Grundfrequenz des Stromsollwertes vorgegeben wird, derart, daß der Betrag des Offsetwertes bei einer Änderung der Grundfrequenz des Stromsollwertes vergrößert wird, insbesondere stetig zur Grundfrequenz. Entsprechend wird bei einer Drehzahlreduzierung der Betrag des Offsetwertes vermindert. Durch die stetige Anpassung des Offsetwertes an die Rotordrehzahl des Schrittmotors ergibt sich ein kontinuierlicher Übergang zwischen dem stromgeregelten und dem spannungsgesteuerten Betrieb des Schrittmotors, was einen besonders weichen, vibrationsarmen Motorlauf ermöglicht. Insbesondere werden Momentensprünge im Antriebsmoment des Schrittmotors vermieden. Die Anpassung des Offsetwertes an die Grundfrequenz des Stromsollwertes beziehungsweise die Rotordrehzahl kann beispielsweise in der Weise erfolgen, daß der Betrag oder die Amplitude des Offsetwertes oberhalb einer vorgegebenen Grenzdrehzahl proportional zur Drehzahldifferenz zwischen der Rotordrehzahl und der Grenzdrehzahl erhöht wird. Unterhalb der Grenzdrehzahl wird der Offsetwert auf Null gesetzt.

Vorteilhaft ist, wenn das Sollwertsignal durch Addition zweier Signalanteile gebildet wird und wenn einer dieser Signalanteile dem Stromsollsignal im stromgeregelten Betrieb des Schrittmotors und der Betrag des anderen Signalanteils dem Offsetwert entspricht. Dabei sind die beiden Signalanteile synchron zueinander und jeweils vorzeichengleich. Durch die Addition der beiden Signalanteile kann die Amplitude des Offsetwertes auf einfache Weise in Abhängigkeit von der Rotordrehzahl des Schrittmotors beziehungsweise der Grundfrequenz des Sollstromwertes verändert werden. Selbstverständlich können die beiden Signalanteile auch voneinander subtrahiert werden, wenn die Signalanteile jeweils zueinander entgegengesetzte Vorzeichen aufweisen.

Bei einer bevorzugten Ausführungsform der Erfindung weist der dem Offsetwert entsprechende Signalanteil im Nulldurchgang des anderen, dem Stromsollsignal im stromgeregelten Betrieb des Schrittmotors entsprechenden Signalanteil einen Signalsprung auf. Benachbart zu den Nulldurchgängen des Sollwertsignals ergibt sich dann eine um den Betrag des Signalsprungs gegenüber dem Stromsollsignal im stromgeregelten Betrieb betragsmäßig vergrößertes Stromsollsignal, wodurch in diesem Bereich des Stromsollsignals ein höheres Drehmoment des Schrittmotors erreicht wird. Durch wechselnde mechanische Drehmoment belastung des Schrittmotors auf tretende Winkel beschleunigungen des Rotors können dadurch noch besser unterdrückt werden.

Vorteilhaft ist, wenn das Stromsollsignal ein durch eine Folge von Stützstellen gebildetes zeitdiskretes Signal ist und wenn die Signalpegel der einzelnen Stützstellen jeweils von Null verschieden gewählt werden. Jeder Stützstelle des Stromsollsignals kann dann jeweils eindeutig ein Vorzeichen zugeordnet werden, so daß das Vorzeichen des Offsetwertes jeweils eindeutig bestimmt werden kann.

Vorteilhaft ist, wenn im stromgeregelten Betrieb des Schrittmotors die Strangspannungen der Wicklungsstränge des Schrittmotors zum Erzeugen eines dem Sollwertsignal angenäherten Strangstromverlaufs pulsweitenmoduliert werden. Die Strangspannungen der einzelnen Wicklungsstränge können dann besonders verlustarm entsprechend den jeweils einzuprägenden Strangströmen eingestellt werden.

Bezüglich des elektrischen Antriebs besteht die Lösung der eingangs genannten Aufgabe darin, daß in den Signalweg zwischen dem Signalgenerator und dem Soll-Istwert-Vergleicher ein Additionsglied angeordnet ist, dessen erster Eingang mit dem Signalgenerator und dessen zweiter Eingang mit einem Offsetsignalerzeuger zum Erzeugen eines zum Ausgangssignal des Signalgenerators vorzeichengleichen Offset-Wechselsignales bei Überschreiten einer vorgegebenen, die Drehzahl des Schrittmotors bestimmenden Grundfrequenz des Signalgenerator-Ausgangssignales verbunden ist.

Im spannungsgesteuerten Betrieb und/oder im Übergangsbereich zwischen stromgeregeltem und spannungsgesteuerten Betrieb des Schrittmotors kann dann der Stromsollwert des Regelkreises im Vergleich zu dem entsprechenden Stromsollwert im stromgeregelten Betrieb um das Offset-Wechselsignal betragsmäßig erhöht werden. Wie bei dem Verfahren bereits erläutert wurde, ergibt sich dadurch ein vibrationsarmer gleichmäßiger Motorlauf.

Vorteilhaft ist, wenn der Offsetsignalerzeuger einen vom Ausgangssignal des Signalgenerators getriggerten Basisoffsetsignal-Generator aufweist, dessen Ausgang über ein Multiplizierglied mit dem das Offset-Wechselsignal aufweisenden zweiten Eingang des Additionsglieds verbunden ist, und wenn ein Eingang des Multiplizierglieds mit einer Steuereinrichtung zur Einstellung der Signalamplitude des an dem Eingang des Additionsglieds anliegenden Offset-Wechselsignales in Abhängigkeit von der Grundfrequenz des Signalgenerator-Ausgangssignals aufweist. Dabei ist die Steuereinrichtung vorzugsweise so ausgebildet, daß die Signalamplitude des Offset-Wechselsignales ab einer vorgegebenen Grundfrequenz des Signalgenerator-Ausgangssignales stetig und insbesondere linear mit der Grundfrequenz und somit die Drehzahl des Schrittmotors erhöht wird. Dadurch ergibt sich bei einer Erhöhung der Rotordrehzahl ab einer vorgegebenen Grenzdrehzahl ein kontinuierlicher Übergang zwischen stromgeregeltem und spannungsgesteuertem Betrieb des Schrittmotors. Der Schrittmotor weist dann einen noch vibrationsarmeren Motorlauf auf.

Vorteilhaft ist, wenn der Signalgenerator einen Datenspeicher aufweist, in dem Stützstellen für das Ausgangssignal des Signalgenerators abgelegt sind und wenn die Stützstellen jeweils von Null verschieden sind. Das Ausgangssignal des Signalgenerators weist dann jeweils eindeutig entweder ein positives oder ein negatives Vorzeichen auf, so daß das jeweilige Vorzeichen für das zu dem Ausgangssignal des Signalgenerators hinzuzuaddierende Offset-Wechselsignal eindeutig bestimmt werden kann.

Nachfolgend sind Ausführungsbeispiele der Erfindung anhand der Zeichnung näher erläutert.

Es zeigen:

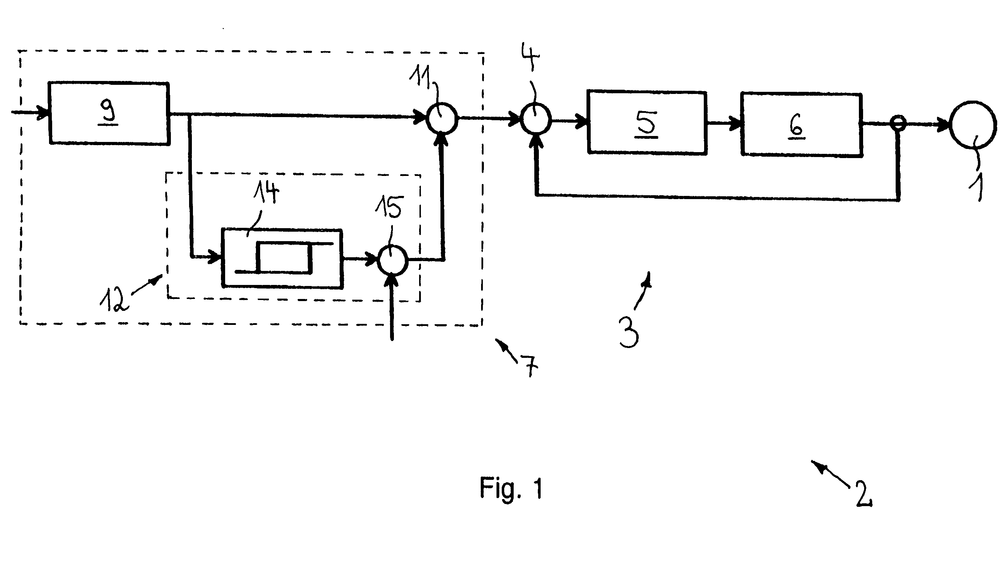

- Fig. 1: ein Blockschaltbild eines elektrischen Antriebs,
- Fig. 2: den zeitlichen Verlauf des Ausgangssignals des Signalgenerators des in Figur 1 gezeigten Antriebs,
- Fig. 3: den zeitlichen Verlauf des Ausgangssignales des Offset-Signalerzeugers des in Figur 1 gezeigten Antriebs,
- Fig. 4: das am Eingang des Soll-Ist-Vergleiches des in Figur 1 gezeigten Stromregelkreises anliegende Sollwertsignal,
- Fig. 5: das am Ausgang des in Figur 1 gezeigten Stromreglers anliegende Stellsignal für die die Strangspannungen des Schrittmotors steuernde Pulsweitenmodulationseinrichtung,
- Fig. 6: eine graphische Darstellung der Amplitude des in Figur 3 gezeigten Offset-Wechselsignales in Abhängigkeit von der Rotordrehzahl, wobei auf der Abszisse die Rotordrehzahl und auf der Ordinate die Amplitude aufgetragen ist und
- Fig. 7 und 8: den zeitlichen Verlauf eines durch Abtastung eines sinusförmigen Analogsignales gebildeten zeitdiskreten Stromsollsignales für einen Regelkreis zur Regelung der Wicklungsströme eines Schrittmotors, wobei auch das Analogsignal dargestellt ist.

Ein elektrischer Antrieb weist einen Schrittmotor 1 und eine Motorsteuerung 2 mit einem Regelkreis 3 zum Regeln der Strangströme in den Stator-Wicklungssträngen des Schrittmotors 1 auf. Der Regelkreis 3 hat einen Soll-Istwert-Vergleicher 4, dessen Ausgang mit dem Eingang eines Stromreglers 5 verbunden ist. Dem Stromregler 5 ist eine Endstufe 6 zum Ansteuern der Wicklungsstränge nachgeschaltet.

Zum Messen von Istwerten der Strangströme des Schrittmotors 1 ist eine Strommeßeinrichtung vorgesehen, deren Meßsignalausgang mit einem Istwerteingang des Soll-Istwert-Vergleichers 4 verbunden ist. Der Sollwerteingang des Soll-Istwert-Vergleichers 4 ist mit dem Ausgang eines Signalgebers 7 verbunden, der ein Sollwertsignal 8 für die das rotierende Magnetfeld des Schrittmotors 1 erzeugenden Strangströme vorgibt. An dem mit dem Eingang des Stromreglers 5 verbundenen Ausgang des Soll-Istwert-Vergleichers 4 liegt ein der Differenz aus den Ausgangssignalen des Signalgebers 7 und der Strommeßeinrichtung entsprechendes Differenzsignal an.

Zur Pulsweitenmodulation der Strangspannungen weist die Endstufe 6 eine mit einer Betriebsspannungsquelle verbundene Pulsweitenmodulationseinrichtung auf, mittels der zu durch einen Taktgeber vorgegebenen Zeitpunkte Spannungsimpulse an die einzelnen Wicklungsstränge des Schrittmotors 1 anlegbar sind. Die Pulsweite der Spannungspulse ist veränderbar und wird bis zu einer vorgegebenen Aussteuerungsgrenze des Regelkreises 3 durch ein am Eingang der Pulsweitenmodulationseinrichtung anliegendes Stellsignal jeweils so eingestellt, daß in die einzelnen Wicklungsstränge des Schrittmotors 1 jeweils etwa der durch das am Ausgang des Signalgebers 7 anliegende Sollwertsignal 8 vorgegebene Momentanwert des Strangstromes eingeprägt wird, das heißt es wird ein dem Sollwertsignal 8 angenäherter Strangstromverlauf erzeugt. Beim Erreichen oder Überschreiten der Aussteuerungsgrenze des Regelkreises 3 werden die Spannungspulse mit der maximal einstellbaren Pulsweite an die Wicklungsstränge angelegt.

Der Signalgeber 7 hat einen Signalgenerator 9 zum Erzeugen eines etwa sinusförmigen Stromsollsignales 10, dessen Grundfrequenz die Drehzahl des Schrittmotors 1 vorgibt. Der Ausgang des Signalgenerators 9 ist mit einem ersten Eingang eines Additionsglieds 11 verbunden. Der zweite Eingang des Additionsglieds 11 ist am Ausgang eines Offsetsignalerzeugers 12 angeschlossen, an welchem ein Offset-Wechselsignal 13 anliegt, wenn die die Drehzahl des Schrittmotors 1 vorgebende Grundfrequenz des Sollwertsignales 8 einen durch die Aussteuerungsgrenze des Regelkreises 3 vorgegebenen, einer Grenzdrehzahl n_{gr} des Schrittmotors 1 entsprechenden Grenzwert überschreitet. Der Grenzwert ist so gewählt, daß der Regelkreis 3 beim Ansteuern des Schrittmotors 1 mit einer dem Grenzwert entsprechenden Grundfrequenz des Stromsollsignales 10 an wenigstens einer, innerhalb einer Halbwelle des Stromsollsignales 10 befindlichen Stelle die Aussteuerungsgrenze erreicht. Der Ausgang des Additionsglieds 11 ist mit dem Sollwerteingang des Soll-Ist-Vergleichers 4 verbunden.

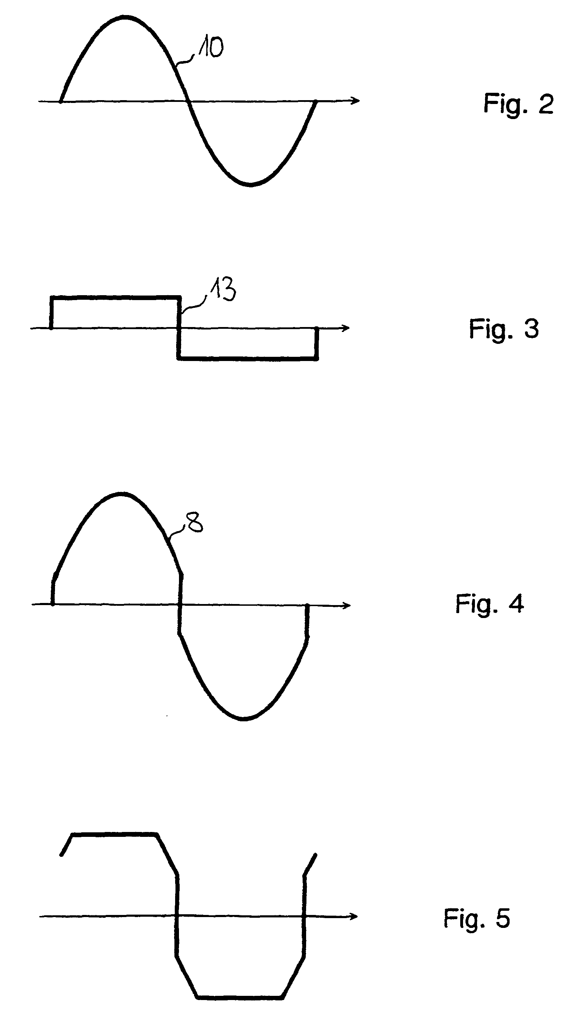

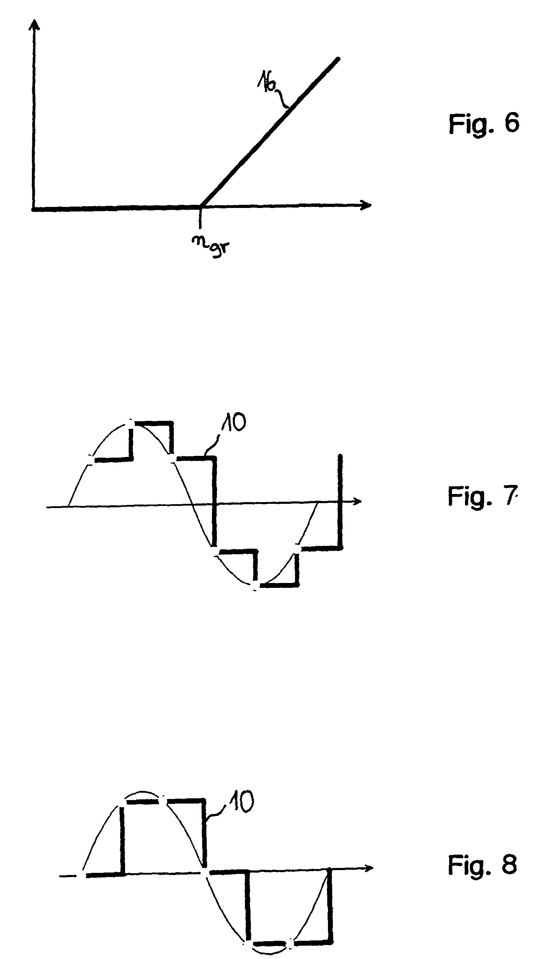

In Figur 2 und 3 ist erkennbar, daß das Offset-Wechselsignal 13 ein Rechtecksignal ist, das synchron und jeweils vorzeichengleich zu dem am Ausgang des Signalgenerators 9 anliegenden Stromsollsignal 10 ist. Zum Erzeugen des Offset-Wechselsignales 13 weist der Offsetsignalerzeuger 12 einen vom Ausgangssignal des Signalgenerators 9 getriggerten Basisoffsetsignal-Generator 14 auf, der ein Vorzeichenglied umfaßt, das ein bezüglich der Nullinie symmetrisches Wechsel-Rechtecksignal abgibt, dessen Polarität jeweils derjenigen des Stromsollsignales 10 entspricht. Der Ausgang des Basisoffsetsignal-Generators 14 ist mit dem ersten Eingang eines Multiplizierglieds 15 verbunden, das mit seinem Ausgang an dem Sollwerteingang des Soll-Istwert-Vergleichers 4 angeschlossen ist. Der zweite Eingang des Multiplizierglieds 15 ist mit dem ein Steuersignal 16 aufweisenden Ausgang einer Steuereinrichtung verbunden. Wie in Figur 6 erkennbar ist, ist das Steuersignal 16 bis zu der durch die Aussteuerungsgrenze des Regelkreises 3 vorgegebenen Grenzdrehzahl n_{gr} gleich Null und steigt ab der Grenzdrehzahl n_{gr} linear mit der Rotordrehzahl beziehungsweise der Grundfrequenz des Stromsollsignales 10 an. Das am Ausgang des Multiplizierglieds 15 anliegende Offset-Wechselsignal 13 weist eine dem Steuersignal 16 entsprechende, von der Drehzahl des Schrittmotors 1 abhängige Amplitude auf.

Das am Sollwerteingang des Soll-Istwert-Vergleichers 4 anliegende Sollwertsignal 8 entspricht also bei einer Rotordrehzahl, die kleiner oder gleich der Grenzdrehzahl n_{gr} ist, dem etwa sinusförmigen Stromsollsignal 10 und bei Rotordrehzahlen, die größer als die Grenzdrehzahl n_{gr} sind, wird zu dem Stromsollsignal 10 das am zweiten Eingang des Additionsglieds 11 anliegende, in der Amplitude von der Rotordrehzahl abhängige Offset-Wechselsignal 13 addiert. In vorteilhafterweise wird dadurch ein kontinuierlicher Übergang vom stromgeregelten zum spannungsgeführten Betrieb des Schrittmotors 1 erreicht. Insbesondere werden im Bereich der Aussteuerungsgrenze und/oder beim Überschreiten der Aussteuerungsgrenze des Regelkreises 3 durch mechanische Schwingungen beziehungsweise Winkelbeschleunigungen des Schrittmotors-Rotors verursachte Nullstellen im Ausgangssignal des Soll-Istwert-Vergleichers 4 und/oder des Stromreglers 5 vermieden. Dadurch ergibt sich im Bereich der Aussteuerungsgrenze ein besonders gleichmäßiger, vibrationsarmer Motorlauf.

Der Signalgenerator 9 weist einen Datenspeicher auf, in dem Stützstellen für das Ausgangssignal des Signalgenerators 9 abgelegt sind. Zur Bildung des in Figur 7 und 8 gezeigten zeitdiskreten Stromsollsignales 8 wird zu durch ein Taktsignal vorgegebenen Zeitpunkten jeweils eine Stützstelle aus dem Datenspeicher ausgelesen. Bei dem Ausführungsbeispiel nach Figur 8 wird das analoge Stromsollsignal 10 jeweils im Nulldurchgang abgetastet, so daß die entsprechenden Stützstellen gleich Null sind. Bei dem in Figur 7 gezeigten, bevorzugten Ausführungsbeispiel sind die Abstastpunkte dagegen so gewählt, daß sämtliche in den Datenspeicher abgelegte Stützstellen jeweils von Null verschieden sind. Dadurch wird erreicht, daß die den einzelnen Stützstellen zugeordneten Signalpegel jeweils ein eindeutiges Vorzeichen aufweisen, so daß das Vorzeichenglied des Basisoffset-Signalgenerators 14 eindeutig angesteuert werden kann.

Bei dem Verfahren zum Positionieren des Schrittmotors 1 wird ein Stromsollsignal 10 erzeugt, das den Strangstromverlauf für ein umlaufendes Magnetfeldes des Schrittmotor-Stators in den Wicklungssträngen des Schrittmotors vorgibt. Die Strangströme werden in einem Regelkreis 3 bis zu einer vorgegebenen Aussteuerungsgrenze der Strangspannung entsprechend dem Stromsollsignal 10 stromgeregelt. Ab dieser Aussteuerungsgrenze wird der Schrittmotor 1 spannungsgesteuert betrieben. Im Bereich der Aussteuerungsgrenze und/oder beim Überschreiten der Aussteuerungsgrenze des Regelkreises 3 wird das Stromsollsignal 10 des Regelkreises 3 um einen vorgegebenen Offsetwert betragsmäßig erhöht und als Sollwertsignal 8 dem Regelkreis 3 zugeführt.

## Patentansprüche

1. Verfahren zum Positionieren eines Schrittmotors (1), wobei zum Erzeugen eines Statordrehfeldes ein den Strangstromverlauf in den Wicklungssträngen vorgebendes Stromsollsignal (10) erzeugt wird, und wobei die Strangströme in einem Regelkreis (3) bis zu einer vorgegebenen Aussteuerungsgrenze der Strangspannung entsprechend dem Stromsollsignal (10) stromgeregelt und der Schrittmotor (1) ab dieser Aussteuerungsgrenze spannungsgesteuert betrieben wird, **dadurch gekennzeichnet, daß** im Bereich der Aussteuerungsgrenze und/oder beim Überschreiten der Aussteuerungsgrenze des Regelkreises (3) das Stromsollsignal (10) des Regelkreises um einen vorgegebenen Offsetwert betragsmäßig erhöht und als Sollwertsignal (8) dem Regelkreis (3) zugeführt wird.

2. Verfahren nach Anspruch 1, **dadurch gekennzeichnet, daß** der Offsetwert in Abhängigkeit von der die Rotordrehzahl des Schrittmotors (1) bestimmenden Grundfrequenz des Stromsollsignales (10) vorgegeben wird, derart, daß der Betrag des Offsetwertes bei einer Änderung der Grundfrequenz des Stromsollsignales (10) vergrößert wird, insbesondere stetig zur Grundfrequenz.

3. Verfahren nach Anspruch 1 oder 2, **dadurch gekennzeichnet, daß** das Sollwertsignal (8) durch Addition zweier Signalanteile gebildet wird und daß einer dieser Signalanteile dem Stromsollsignal (10) im stromgeregelten Betrieb des Schrittmotors (1) und der Betrag des anderen Signalanteils dem Offsetwert entspricht.

4. Verfahren nach einem der Ansprüche 1 bis 3, **dadurch gekennzeichnet, daß** der dem Offsetwert entsprechende Signalanteil im Nulldurchgang des anderen, dem Stromsollsignal im stromgeregelten Betrieb des Schrittmotors (1) entsprechenden Signalanteil einen Signalsprung aufweist.

5. Verfahren nach einem der Ansprüche 1 bis 4, **dadurch gekennzeichnet, daß** der dem Offsetwert entsprechende Signalanteil ein bipolares Wechsel-Rechtecksignal ist.

6. Verfahren nach einem der Ansprüche 1 bis 5, **dadurch gekennzeichnet, daß** das Stromsollsignal (10) ein durch eine Folge von Stützstellen gebildetes zeitdiskretes Signal ist und daß die Signalpegel der einzelnen Stützstellen jeweils von Null verschieden gewählt werden.

7. Verfahren nach einem der Ansprüche 1 bis 6, **dadurch gekennzeichnet, daß** im stromgeregelten Betrieb des Schrittmotors (1) die Strangspannungen der Wicklungsstränge des Schrittmotors (1) zum Erzeugen eines dem Sollwertsignal (8) angenäherten Strangstromverlaufs pulsweitenmoduliert werden.

8. Elektrischer Antrieb, mit einem Schrittmotor (1) und mit einem Regelkreis (3) zum Regeln der Strangströme in den Stator-Wicklungssträngen des Schrittmotors (1), wobei der Regelkreis (3) einen Soll-Istwert-Vergleicher (4) und einen Stromregler (5) aufweist, dem eine Endstufe (6) zum Ansteuern der Wicklungsstränge nachgeschaltet ist, und mit einem mit dem Sollwerteingang des Soll-Istwert-Vergleichers (4) verbundenen, ein Ausgangssignal liefernden Signalgenerator (9), **dadurch gekennzeichnet, daß** in den Signalweg zwischen dem Signalgenerator (9) und dem Soll-Istwert-Vergleicher (4) ein Additionsglied (11) angeordnet ist, dessen erster Eingang mit dem Signalgenerator (9) und dessen zweiter Eingang mit einem Offsetsignalerzeuger (12) zum Erzeugen eines zum Ausgangssignal des Signalgenerators vorzeichengleichen Offset-Wechselsignales (13) bei Überschreiten einer vorgegebenen, die Drehzahl des Schrittmotors (1) bestimmenden Grundfrequenz des Signalgenerator-Ausgangssignales verbunden ist.

9. Elektrischer Antrieb nach Anspruch 8, **dadurch gekennzeichnet, daß** der Offsetsignalerzeuger (12) einen vom Ausgangssignal des Signalgenerators (9) getriggerten Basisoffsetsignal-Generator (14) aufweist, dessen Ausgang über ein Multiplizierglied (15) mit dem das Offset-Wechselsignal (13) aufweisenden zweiten Eingang des Addiditionsglieds (11) verbunden ist, und daß ein Eingang des Multiplizierglieds (15) mit einer Steuereinrichtung zur Einstellung der Signalamplitude des an dem Ausgang des Addiditionsglieds (11) anliegenden Offset-Wechselsignales in Abhängikeit von der Grundfrequenz des Signalgenerator-Ausgangssignales aufweist.

10. Elektrischer Antrieb nach Anspruch 8 oder 9, **dadurch gekennzeichnet, daß** der Signalgenerator (9) einen Datenspeicher aufweist, in dem Stützstellen für das Ausgangssignal des Signalgenerators (9) abgelegt sind und daß die Stützstellen jeweils von Null verschieden sind.

11. Elektrischer Antrieb nach einem der Ansprüche 8 bis 10, **dadurch gekennzeichnet, daß** in dem Signalübertragungsweg von dem Stromregler (5) zu der Endstufe (6) eine Pulsweitenmodulationseinrichtung zur Pulsweitenmodulation der Strangspannungen der Wicklungsstränge angeordnet ist.

## Claims

1. Method for positioning a stepper motor (1), wherein in order to produce a rotating stator field, a nominal current signal (10) which determines the current flow in the winding phases is generated, and wherein the phase currents are regulated in a regulating circuit (3) up to a predetermined control limit of the phase voltage according to the nominal current signal (10), and the stepper motor (1) is operated under voltage control starting from this control limit, **characterised in that** in the region of the control limit and/or when the control limit of the regulating circuit (3) is exceeded the nominal current signal (10) of the regulating circuit is increased in amount by a given offset value and is supplied to the regulating circuit (3) as a setpoint signal (8).

2. Method according to claim 1, **characterised in that** the offset value is set as a function of the basic frequency of the nominal current signal (10) which determines the rotor speed of the stepper motor (1), such that the amount of the offset value is increased if there is a change in the fundamental frequency of the nominal current signal (10), and in particular is increased constantly up to the fundamental frequency,.

3. Method according to claim 1 or 2, **characterised in that** the setpoint signal (8) is formed by adding together two signal fractions and one of these signal fractions corresponds to the nominal current signal (10) in the current-controlled operation of the stepper motor (1) and the amount of the other signal fraction corresponds to the offset value.

4. Method according to one of claims 1 to 3, **characterised in that** the signal fraction corresponding to the offset value has a sudden change in signal in the zero crossing of the other signal fraction corresponding to the nominal current signal in the current-controlled operation of the stepper motor (1).

5. Method according to one of claims 1 to 4, **characterised in that** the signal fraction corresponding to the offset value is a bipolar alternating rectangular signal.

6. Method according to one of claims 1 to 5, **characterised in that** the nominal current signal (10) is a time-discrete signal formed by a sequence of support points and **in that** the signal levels of the individual support points are each chosen to be other than zero.

7. Method according to one of claims 1 to 6, **characterised in that** in the current-controlled operation of the stepper motor (1) the phase voltages of the winding phases of the stepper motor (1) are pulse-width-modulated in order to produce a phase current pattern similar to the setpoint signal (8).

8. Electric drive having a stepper motor (1) and a regulating circuit (3) for regulating the currents in the stator winding phases of the stepper motor (1), wherein the regulating circuit (3) comprises a setpoint/actual value comparator (4) and a current regulator (5) to which is connected an output element (6) for actuating the winding phases, and having a signal generator (9) which delivers an output signal and is connected to the setpoint value input of the setpoint/actual value comparator (4), **characterised in that**, in the signal path between the signal generator (9) and the setpoint/actual value comparator (4), is provided an adding member (11) the first input of which is connected to the signal generator (9) and the second input of which is connected to an offset signal generator (12) for generating an offset alternating signal (13), with the same prefix as the output signal from the signal generator, when a given fundamental frequency of the signal generator output signal which determines the speed of the stepper motor (1) is exceeded.

9. Electric drive according to claim 8, **characterised in that** the offset signal generator (12) comprises a basic offset signal generator (14) triggered by the output signal from the signal generator (9), the output of which is connected via a multiplying member (15) to the second input of the adding member (11) comprising the offset alternating signal, and **in that** an input of the multiplying member (15) is connected with a control device for setting the signal amplitude of the offset alternating signal present at the output of the adding member (11) as a function of the fundamental frequency of the signal generator output signal.

10. Electric drive according to claim 8 or 9, **characterised in that** the signal generator (9) has a data memory in which support points for the output signal from the signal generator (9) are stored and **in that** the support points are each different from zero.

11. Electric drive according to one of claims 8 to 10, **characterised in that**, in the signal transmission path from the current regulator (5) to the output element (6), is provided a pulse width modulating device for modulating the pulse width of the phase voltages of the winding phases.

## Revendications

1. Procédé pour le positionnement d'un moteur pas-à-pas (1), d'un signal théorique de courant (10) prédéfinissant le trajet du courant de phase d'enroulement dans les conducteurs de phase étant généré pour produire un champ rotatif de stator, et les courants de phase étant régulés au niveau du courant dans un circuit régulateur (3) jusqu'à un niveau limite prédéfini de la tension par phase d'enroulement en fonction du signal théorique du courant (10) et le moteur pas-à-pas (1) étant exploité commandé par tension à partir de ce niveau limite, **caractérisé en ce que**, dans la plage du niveau limite et/ou lors du dépassement du niveau limite du circuit régulateur (3), le signal théorique du courant (10) du circuit régulateur est augmenté d'une valeur de décalage prédéfinie et est amené comme signal de valeur théorique (8) au circuit régulateur (3).

2. Procédé selon la revendication 1, **caractérisé en ce que** la valeur de décalage est prédéfinie en fonction de la fréquence de base, déterminant la vitesse de rotation du rotor du moteur pas-à-pas (1), du signal théorique de courant (10), **en ce que** le montant de la valeur de décalage est augmenté dans le cas d'une variation de la fréquence de base du signal théorique de courant (10), en particulier constamment par rapport à la fréquence de base.

3. Procédé selon la revendication 1 ou 2, **caractérisé en ce que** le signal de la valeur théorique (8) est formé par l'addition de deux fractions de signal et **en ce que** l'une de ces fractions de signal correspond au signal théorique du courant (10) dans le fonctionnement régulé au niveau du courant du moteur pas-à-pas (1) et le niveau de l'autre fraction de signal correspond à la valeur de décalage.

4. Procédé selon l'une quelconque des revendications 1 à 3, **caractérisé en ce que** la fraction de signal correspondant à la valeur de décalage présente un écart de signal dans le passage par zéro de l'autre fraction de signal correspondant au signal théorique du courant dans le fonctionnement régulé au niveau du courant du moteur pas-à-pas (1).

5. Procédé selon l'une quelconque des revendications 1 à 4, **caractérisé en ce que** la fraction de signal correspond à la valeur de décalage est un signal rectangulaire bipolaire de changement.

6. Procédé selon l'une quelconque des revendications 1 à 5, **caractérisé en ce que** le signal théorique du courant (10) est un signal discret dans le temps et formé par une succession de points d'appui et **en ce que** les niveaux de signal des points d'appui individuels sont choisis à chaque fois différents de zéro.

7. Procédé selon l'une quelconque des revendications 1 à 6, **caractérisé en ce que**, dans le fonctionnement régulé au niveau du courant du moteur pas-à-pas (1), les tensions par phase d'enroulement des conducteurs de phase du moteur pas-à-pas (1) font l'objet d'une modulation d'impulsions en largeur pour générer un trajet du courant de phase qui approche le signal de la valeur théorique (8).

8. Entraînement électrique, avec un moteur pas-à-pas (1) et avec un circuit régulateur (3) pour le réglage des courants de phase dans les conducteurs de phase du stator du moteur pas-à-pas (1), le circuit régulateur (3) présentant un comparateur de valeur théorique / valeur réelle (4) et un régulateur de courant (5), qui est monté en amont d'un étage final (6) pour l'actionnement des conducteurs de phase, et avec un générateur de signal (9) relié à l'entrée de valeur théorique du comparateur valeur théorique / valeur réelle (4) et fournissant un signal de sortie, **caractérisé en ce qu'**un élément d'addition (11) est disposé dans le chemin du signal entre le générateur de signal (9) et le comparateur de valeur théorique /valeur réelle (4), élément dont la première entrée est reliée au générateur de signal (9) et la seconde entrée à un générateur de signal de décalage (12) pour générer un signal variable de décalage (13) du même signe que le signal de sortie du générateur de signal en cas de dépassement d'une fréquence de base de prédéfinition, déterminant la vitesse de rotation du moteur pas-à-pas (1), du signal de sortie du générateur de signal.

9. Entraînement électrique selon la revendication 8, **caractérisé en ce que** le générateur de signal de décalage (12) présente un générateur de signal de décalage de base (13) déclenché par le signal de sortie du générateur de signal (9), dont la sortie est reliée au moyen d'un élément multiplicateur (15) à la seconde entrée, présentant le signal variable de décalage (13), de l'élément d'addition (11), et **en ce qu'**une entrée de l'élément multiplicateur (15) est dotée d'un dispositif de commande pour le réglage de l'amplitude de signal du signal variable de décalage s'appliquant sur la sortie de l'élément d'addition (11) en fonction de la fréquence de base du signal de sortie du générateur de signal.

10. Entraînement électrique selon la revendication 8 ou 9, **caractérisé en ce que** le générateur de signal (9) présente une mémoire de données dans laquelle sont déposés des points de base pour le signal de sortie du générateur de signal (9) et **en ce que** les points de base sont respectivement différents de zéro.

11. Entraînement électrique selon l'une quelconque des revendications 8 à 10, **caractérisé en ce qu'**un appareil de modulation des impulsions en largeur pour la modulation des impulsions en largeur des tensions par phase d'enroulement des conducteurs est disposé dans le chemin de transmission de signal qui va du régulateur de courant (5) à l'étage final (6).
